# EUROPEAN PATENT APPLICATION

(11) **EP 2 824 567 A1**
(43) Date of publication of application: **14.01.2015**
(21) Application number: 12870781.7
(22) Date of filing: 21.12.2012
(51) Int. Cl.: G06F 9/44

(54) **METHOD AND APPARATUS FOR CUSTOMIZING FUNCTION MENU OF APPLICATION**

(30) Priority: 06.03.2012 CN 201210058097
(71) Applicant: Huizhou TCL Mobile Communication Co., Ltd., Huizhou, Guangdong 516006 (CN)
(72) Inventor: YANG, Zhibing, HuiZhou Guangdong 516006 (CN)
(74) Representative: Isarpatent
(86) International application number: PCT/CN2012/087146
(87) International publication number: WO 2013/131396

(57) **Abstract**

The present invention proposes a method for customizing a function menu of an application program and a related method. The method includes: entering an editing interface of the function menu of an application program; receiving an editing request of the function menu and identifying a type of the editing request; editing the function item of the function menu in the editing interface according to the type of the editing request to form a new function menu; and receiving the new function menu and show the new function menu.

## Description

### BACKGROUND OF THE INVENTION

### 1. Field of the Invention

The present invention relates to the field of mobile terminals, and more particularly, to a device for customizing a function menu of an application program and a method thereof.

### 2. Description of the Prior Art

Performance of mobile terminals improves. An application software, soul of mobile terminals, becomes more powerful as well. Different kinds of application programs are created. So the application program of the main interface of the mobile terminals has more and more main menus. For users' convenience, the conventional technology provides a customization method of main menus of the application program. The users can edit the main menus of the application program of the main interface, and it allows the users to use the application program quickly and conveniently.

Meanwhile, more and more functions of the application program are provided to users with the development of technology. To realize human-computer interaction, each of the functions in the application program needs to have a corresponding function item. For example, the same application program has functions of music playing and e-book reading. Even an ordinary application program, such as yellow pages, has a lot of function items on the function menu of the application program such as sending messages, editing a list recording people in contact, copying a list recording people in contact, dialing, and sending mails.

However, all possibly used function items are fixed in the function menu of the application program in the conventional mobile terminal before the conventional mobile terminal becomes a product and leaves the factory because of historical reasons and thinking such as technological development and traditional research and development thinking. If a user wants to use a desired function item, he/she has to search for it one by one until he/she finds it. For example, when the user wants to e-mail to a person from yellow pages, he/she has to enter the function menu and look for the function item of "send mail". Some function items are located in the next page of the function menu. When the user wants to use these function items, he/she has to go to the next page to find them. The user cannot use the function menu efficiently or sometimes cannot find desired function items. Besides, all possibly used function items are added to the function menu in application programs to satisfy all users' need. But most of the all possibly used function items are seldom or never used by an individual user.

In sum, routes/nodes of the function menu of the application program are generally fixed. When the user wants to use frequently used functions located deeper in the function menu, it takes much more time for the user when he/she starts to search for the function menu to click the function menu.

### SUMMARY OF THE INVENTION

An object of the present invention is to provide a method for customizing a function menu of a mobile terminal and a device thereof to reduce time produced from starting searching for the function menu to clicking the function menu.

According to one embodiment of the present invention, a method for customizing a function menu of an application program comprises: (A) entering an editing interface of the function menu of the application program; (B) receiving an editing request to the function menu and identifying a type of the editing request; (C) editing function items of the function menu in the editing interface according to the type of the editing request to form a new function menu; (D) receiving the new function menu and showing the new function menu. The step (B) comprises: (B1) receiving a first editing request which indicates to selecting the function item and moving the function item from a first point of coordinate to a second point of coordinate, and identifying the type of the first editing request, and the step (C) comprises: (C1) locating the function item in the function menu according to the second point of coordinate to form the new function menu if the first editing request is a request of adjusting the location of the function item. The step (B) further comprises: (B2) receiving a second editing request which indicates to selecting the function item and deleting the function item, and identifying a type of the second editing request; and the step (C) further comprises: (C2) labeling a display status of the function item to be concealed to form the new function menu if the second editing request is a request of concealing the function item.

According to another embodiment of the present invention, a method for customizing a function menu of an application program comprises: (A) entering an editing interface of the function menu of an application program; (B) receiving an editing request of the function menu and identifying a type of the editing request; (C) editing the function item of the function menu in the editing interface according to the type of the editing request to form a new function menu; (D) receiving the new function menu and show the new function menu.

According to yet another embodiment of the present invention, a device for customizing a function menu of an application program comprises: an identifying module, for receiving an editing request of the function menu and identifying a type of the editing request in an editing interface of the function menu of the application program; an editing module, for dealing with the function item of the function menu according to the type of the editing request in the editing interface to form a new function menu; and a display module, for receiving the new function menu and showing the new function menu.

Compared with the conventional technology, the present invention has some benefits. The reason is as follows: The function items of the function menu of the application program are edited in the present invention to fit users' experience. Workload on searching for the function menu is lessoned, and nodes on looking up the function menu are reduced. Therefore, it saves a lot of time that the user spends on from looking for the function menus to clicking the function menus.

### BRIEF DESCRIPTION OF THE DRAWINGS

Fig. 1 illustrates a flow chart of a method for customizing a function menu of an application program a according to a first embodiment of the present invention.
Fig. 2 illustrates a flow chart of a method for customizing a function menu of an application program a according to a second embodiment of the present invention.
Fig. 3 illustrates a flow chart of a method for customizing a function menu of an application program a according to a third embodiment of the present invention.
Fig. 4 illustrates a flow chart of a method for customizing a function menu of an application program a according to a fourth embodiment of the present invention.
Fig. 5 illustrates a block diagram of a device for customizing a function menu of an application program a according to a first embodiment of the present invention.
Fig. 6 illustrates a block diagram of a device for customizing a function menu of an application program a according to a second embodiment of the present invention.

### DETAILED DESCRIPTION OF THE PREFERRED EMBODIMENTS

In order to illustrate the technique and effects of the present invention, a detailed description will be disclosed by the following disclosure in conjunction with figures.

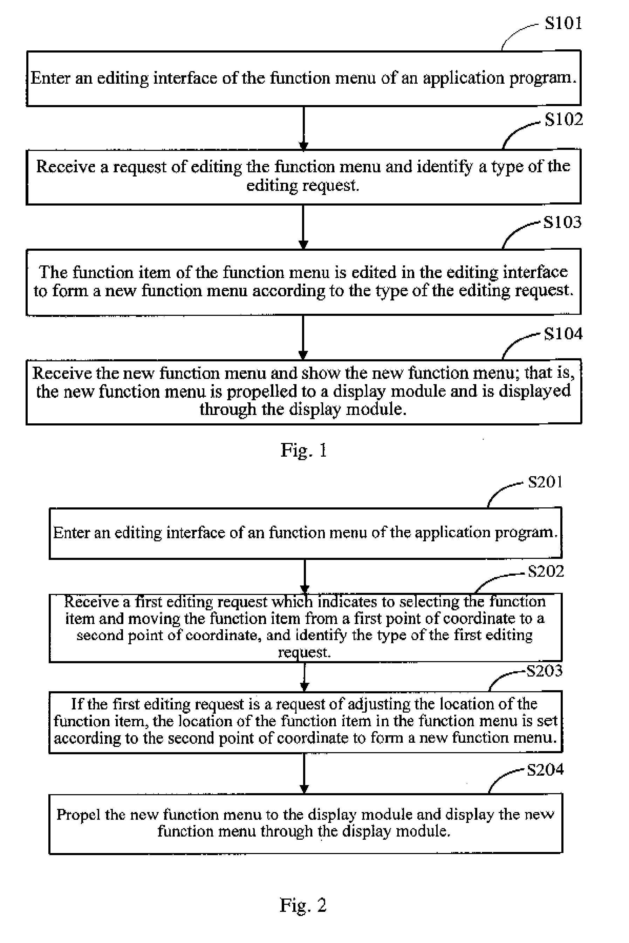

Please refer to Fig. 1 showing a flow chart of a method for customizing a function menu of an application program according to a first embodiment of the present invention. In the present embodiment, the method for customizing the function menu of the application program comprises:
Step S101: Enter an editing interface of the function menu of the application program.

To begin with, a program for editing the function menu of the application program and the editing interface are installed in the mobile terminal. An application program can be yellow pages, messages, mail application, or e-books. In the application interface of the application program, the user will enter the editing interface of the function menu after the operating system cooperates with a method used by the user. The method can be to press the function menu for a while, to trigger an editing option of the function menu, or to trigger a designed button, and the method collaborates in the application interface of the application program.

Step S102: Receive a request of editing the function menu and identify a type of the editing request; that is, receive a request of editing the function menu and identify a type of the editing request in the editing interface.

The user may drag the function, trigger an option of deleting the function menu, or trigger a function list on the editing interface, which is taken as an "act". Any of the "acts" represents an editing request. Different editing requests produce different signals. A baseband processor chip receives the signals and identifies the type of different requests based on different signals.

The editing request comprises requests such as to adjust requests, to conceal requests, and to add requests. Practically, the user chooses one or more than one editing request(s) according to his/her need.

Step S103: The function item of the function menu is edited in the editing interface to form a new function menu according to the type of the editing request. That is, a function item of the function menu is edited according to a related request to form a new function menu. The function item is one item in the function menu of the application program. The function item comprises copying, message sending, editing, and deletion of function items in the yellow pages of the application program. Each of the function items comprises a location datum and a display status corresponding to the function item itself.

The baseband processor chip has different editing measures to deal with different requests, so new function menus with different effects are produced. For example, a request of arranging orders comes with a new function menu with rearranged orders; a request of concealing orders comes with a new function menu with concealed chosen function items; a request of adding function items comes with a new function menu with an addition of the concealed function items.

Step S104: Receive the new function menu and show the new function menu; that is, the new function menu is propelled to a display module and is displayed through the display module.

The function menu is propelled to the display module through the baseband processor chip. After the user leaves the editing interface, the display module automatically renews the function menu. The display module shows all function items through a main menu or a list.

The function items of the application program are edited in the present invention to fit users' experience. The workload on searching for the function menu is lessoned, and the nodes on looking up the function menus are reduced. Therefore, it saves a lot of time that the user spends on from looking for the function menus to clicking the function menus.

In addition, differing from the conventional technology, the present invention provides a customized technological plan of the function item of the function menu the application program in the mobile terminal. The present invention breaks up traditional ways of thinking on research and development of the application program in the mobile terminal. The customized technological plan is a request of customizing the function menu of the application program produced by identifying users' diverse requests. The customized technological plan can be edited correspondingly according to different requests to form a new function menu and to show the new function menu on the screen again. In this way, a customized function menu is realized, and the function menu is not shown on a single interface, which is not useful to the users. Besides, the function menu in the application program can be more effectively used.

Take the request of arranging orders for example. A method for customizing a function menu of an application program in a second embodiment of the present invention is described in detail.

Please refer to Fig. 2 showing a flow chart of the method for customizing the function menu of the application program according to a second embodiment of the present invention. In the present embodiment, the method for customizing the function menu of the application program comprises:
Step S201: Enter an editing interface of the function menu of the application program.

To begin with, a program for editing the function menu of the application program and the editing interface of the program are installed in the mobile terminal. The application program can be yellow pages, messages, mail application, or e-books. A user will enter the editing interface of the function menu after the operating system cooperates with a method used by the user. The method can be to press the function menu for a while, to trigger an editing option of the function menu, or to trigger a designed button, and the method collaborates in the application interface of the application program.

Step S202: Receive a first editing request which indicates to selecting the function item and moving the function item from a first point of coordinate to a second point of coordinate, and identify the type of the first editing request; that is, receive the editing request of choosing the function item and moving the function item from an original point of coordinate to a new point of coordinate, and identify the type of the request as the request of arranging orders.

In the editing interface, the user chooses a function item of which the location needs to be adjusted and drags the function item to a new location, which is an "act". The "act" is taken as an editing request. A baseband processor chip receives a signal generated by the editing request and identifies the signal as a request of adjusting orders. The baseband processor chip marks the point of coordinate of the function item chosen by the user as an original point of coordinate. The baseband processor chip marks the final location of the function item dragged by the user as a new point of coordinate.

Step S203: If the first editing request is a request of adjusting the location of the function item, the location of the function item in the function menu is set according to the second point of coordinate to form a new function menu. That is, when the request is a request of adjusting orders, the chosen function item is calculated and then is located in the function menu to form a new function menu. The function item is one item in the function menu of the application program. The function item comprises copying, message sending, editing, and deletion of the function item in the yellow pages of the application program. Each of the function items comprises a location datum and a display status corresponding to the function item itself.

The baseband processor chip calculates the new location of the function item in the function menu based on the new point of coordinate. The baseband processor chip also renews the information on the location of the new function item to form a new function menu. Therefore, the new function menu is a realization of rearrangement according to the user's request.

Step S204: Propel the new function menu to the display module and display the new function menu through the display module.

The new function menu is propelled to the display module through the baseband processor chip. After the user leaves the editing interface, the display module automatically renews the new function menu. The display module shows all functions through a main menu or a list.

Compared with the conventional technology, the function items of the function menu proposed by the present embodiment are rearranged, so users can adjust the order of the function items according to their using experience. The users can move the most frequently used function items to the top of the function menu. Since the function items of the function menu of the application program in the conventional mobile terminal cannot be adjusted, the function menu proposed by the present embodiment can be a substitute. Users have more flexibility in using the function menu.

Take the concealing request for example. A method for customizing a function menu of an application program in a third embodiment of the present invention is described in detail.

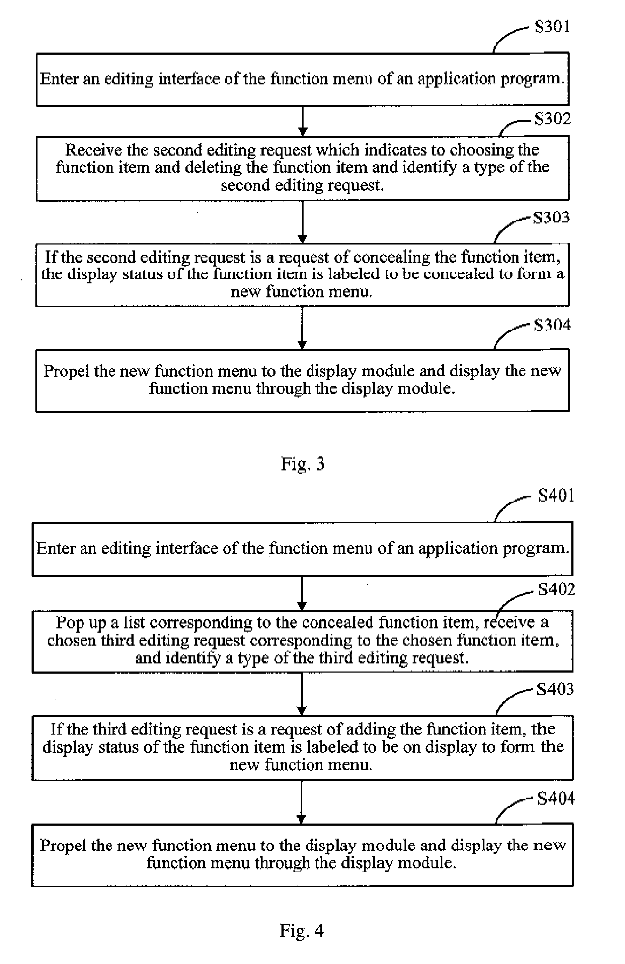

Please refer to Fig. 3 showing a flow chart of the method for customizing the function menu of the application program according to a third embodiment of the present invention. In the present embodiment, the method for customizing the function menu of the application program comprises:
Step S301: Enter an editing interface of the function menu of the application program.

To begin with, a program for editing the function menu of the application program and the editing interface are installed in the mobile terminal. The application program can be yellow pages, messages, mail application, or e-books. A user will enter the editing interface of the function menu after the operating system cooperates with a method used by the user. The method can be to press the function menu for a while, to trigger an editing option of the function menu, or to trigger a designed button, and the method collaborates in the application interface of the application program.

Step S302: Receive the second editing request which indicates to choosing the function item and deleting the function item and identify a type of the second editing request; that is, the editing request produced when the function item is received or the function item is deleted is identified as a concealing request.

In the editing interface, the user chooses a function item. The function item is deleted after the user triggers a specific area on the screen or a designed button. At this time, the "act" is regarded as an editing request. The baseband processor chip receives a signal generated by the editing request and identifies the signal as a concealing request.

Step S303: If the second editing request is a request of concealing the function item, the display status of the function item is labeled to be concealed to form a new function menu. That is, when the request is a concealing request, the display status of the chosen function item is labeled to be concealed to form a new function menu. The function item is one item in the function menu of the application program. The function item comprises copying, message sending, editing, and deletion of the function item in the yellow pages of the application program. Each of the function items comprises a location datum and a display status corresponding to the function item itself.

The display status of the chosen function item is labeled to be concealed by the baseband processor chip, so the new function menu does not comprise the concealed function item. It is notified that the function item can be added to the list when the display status of the function item is labeled to be concealed. The function item can be added again once the user needs.

Step S304: Propel the new function menu to the display module and display the new function menu through the display module.

The new function menu is propelled to the display module through the baseband processor chip. After the user leaves the editing interface, the display module automatically renews the new function menu. The display module shows all functions through a main menu or a list.

Differing from the conventional technology, the user of the third embodiment can decide the number of the function items of the function menu of the application program according to his/her demand. Function items which do not need to be used can be concealed. Only useful function items are shown when the user is using. Problems in the conventional function menu of the application program are that excessive function items are shown, and many function items are useless to users. The present embodiment can successfully solve the problems occurred in the conventional technology and increase speed of searching for function items.

Take the concealing request for example. A method for customizing a function menu of an application program in a fourth embodiment of the present invention is described in detail.

Please refer to Fig. 4 showing a flow chart of the method for customizing the function menu of the application program according to a fourth embodiment of the present invention. In the present embodiment, the method for customizing the function menu of the application program comprises:
Step S401: Enter an editing interface of the function menu of the application program.

To begin with, a program for editing the function menu of the application program and the editing interface are installed in the mobile terminal. An application program can be yellow pages, messages, mail application, or e-books. A user will enter the editing interface of the function menu after the operating system cooperates with a method used by the user. The method can be to press the function menu for a while, to trigger an editing option of the function menu, or to trigger a designed button, and the method collaborates in the application interface of the application program.

Step S402: Pop up a list corresponding to the concealed function item, receive a chosen third editing request corresponding to the chosen function item, and identify a type of the third editing request. That is, prop up all concealed lists of the function items, receive the editing request produced when the concealed function item is chosen, and identify the editing request to be an adding request.

In the editing interface, the function item is added after the user triggers a specific area on the screen or a designed button. At this time, all concealed lists of the function item are propped up. The user chooses function items which need to be added. At this time, the "act" is regarded as an editing request. The baseband processor chip receives a signal generated by the editing request and identifies the signal as an adding request.

Step S403: If the third editing request is a request of adding the function item, the display status of the function item is labeled to be on display to form the new function menu. That is, when the request is an adding request, the display status of the chosen concealed function item is labeled to be on display to form a new function menu. The function item is one item in the function menu of the application program. The function item comprises copying, message sending, editing, and deletion of the function item in the yellow pages of the application program. Each of the function items comprises and a location datum and a display status corresponding to the function item itself.

The display status of the chosen function item is labeled to be on display by the baseband processor chip, so the new function menu comprises the adding function item. It is notified that the function item will be deleted from the list when the display status of the function item is labeled to be on display.

Step S404: Propel the new function menu to the display module and display the new function menu through the display module.

The new function menu is propelled to the display module through the baseband processor chip. After the user leaves the editing interface, the display module automatically renews the new function menu. The display module shows all functions through a main menu or a list.

In addition, the function item can be located last in the function menu. That is, the chosen concealed function item can be located last in the function menu.

Differing from the conventional technology, those function items which used to be not frequently used but now are frequently used are added to the function menu again. In this way, the function menu can be more flexibly arranged, and the function menu can be more effectively used in the fourth embodiment.

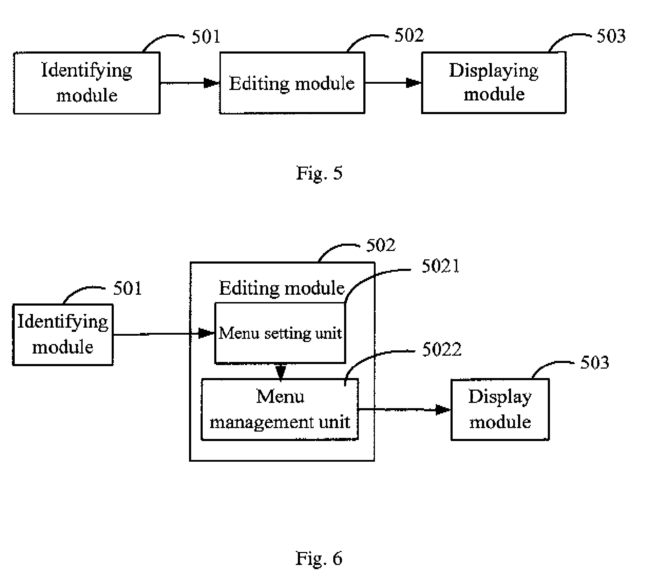

Refer to Fig. 5 showing a schematic diagram of a device for customizing the function menu of the application program according to the first embodiment of the present invention. In the present embodiment, the device for customizing the function menu of the application program comprises an identifying module 501, an editing module 502, and a display module 503.

The embodiment of the present invention proposes the device for customizing the function menu of the application program comprising the identifying module 501, the editing module 502, and the display module 503. The identifying module 501 is used for receiving an editing request of the function menu and identifying a type of the editing request in an editing interface of the function menu of the application program. The editing module 502 is used for dealing with the function item of the function menu according to the type of the editing request in the editing interface to form a new function menu. The display module 503 is used for receiving a new function menu and showing the new function menu.

The function items of the function menu of the application program are edited in the present invention to fit users' experience. Workload on searching for the function menus is lessoned, and nodes on looking up the function menus are reduced. Therefore, it saves a lot of time that the user spends on from looking for the function menus to clicking the function menus.

Refer to Fig. 1 again. In Step S101, the user operates the interface of the application program and the operating system works. In Step S102, the identifying module 501 works. In Step S103, the editing module 502 works. In Step S104, the display module 503 works. The identifying module 501, the editing module 502, and the display module 503 can be acquired by combining programming design languages, such as C++, Hypertext Preprocessor (PHP), Python, and Visual Basic (VB), and Application Programming Interface (API). The API is provided by the operating system where the mobile communications terminal is. Specific realizable methods for the technology are not restricted in the present invention.

Refer to Fig. 6 showing a schematic diagram of a device for customizing the function menu of the application program according to a second embodiment of the present invention. The device for customizing the function menu of the application program in the present embodiment is similar to the device for customizing the function menu of the application program in the first embodiment, except that an editing module 502 comprises a menu setting unit 5021 and a menu management unit 5022. One terminal of the menu setting unit 5021 is connected to one terminal of the identifying module 501. The other terminal of the menu setting unit 5021 is connected to one terminal of the menu management unit 5022. The other terminal of the menu management unit 5022 is connected to the display module 503.

As an improvement, the identifying module 501 is used for receiving a first editing request which indicates to selecting the function item and moving the function item from a first point of coordinate to a second point of coordinate, and for identifying the type of the first editing request. The editing module 502 is used for locating the function item in the function menu according to the second point of coordinate to form a new function menu when the type of the first editing request is to adjust the location of the function item.

As an improvement, the identifying module 501 is used for receiving the second editing request which chooses the function item and deletes the function item and identifying the type of the second editing request. The editing module 502 is used for marking the display status of the function to be concealed to form the new function menu when the second editing request is a request of concealing the function item.

As an improvement, the identifying module 501 is used for popping up a list corresponding to the concealed function item, receiving the chosen third editing request corresponding to the function item, and identifying the third editing request. The editing module 502 is used for marking the display status of the function item to be on display to form the new function menu when the third editing request is a request of adding the function item.

As an improvement, the editing module 502 is still used for locating the function item last in the function menu.

Specifically, the menu setting unit 5021 provides an interface of receiving editing request to receive editing requests from the identifying module 501, and changes orders of the function menu and adds or deletes the function items according to the editing request. The menu management unit 5022 correspondingly changes the location datum and display status of the function item or number of the function items shown on the whole function menu of the function according to the operation of the menu setting unit 5021 to form a new function menu and to propel the new function menu to the display module 503.

The customized methods of the function menu of the application program proposed in the second and third embodiments of the present invention as shown in Fig. 2 and Fig. 3 can be realized with reference to the device for customizing the function menu of the application program as shown in Fig. 5. The modules in the device realize different functions according to individual embodiments. No further description will be provided hereafter.

In addition, the function menu of the application program in the conventional invention is immobile. Taken all of the users into considerations, the order of the function menu of the application program is determined according to most of the users' using habits and possibilities. Thus, the function menu of the application program cannot fulfill each user's using habits. But the order of the function menu of the application program cannot satisfy individual users' using habits. For example, function items which are frequently used may be located last in the function menu. Meanwhile, to satisfy all users' need, a lot of function items are set in the function menu. When an individual user only needs several of the function items, he/she has to look for desired function items from a lot of function items in the function menu. The user cannot operate the desired function items quickly. The present invention provides a customized technological plan of the function item of the function menu of the application program in the mobile terminal. The present invention breaks up traditional ways of thinking on research and development of the application program in the mobile terminal. The user can alter the location of the function menu of the application program and the number of the function items on display. The user can adjust the location of the function items of the function menu of the application program according to his/her using habit. For example, when a user needs to e-mail to a person from yellow pages frequently, the user can move the function item "send mail" to top on the list of the function menu so that the user can use the function menu quickly and conveniently. Meanwhile, the user can adjust the number of the function items of the function menu at his/ her will. Except for several frequently used function items, the user can conceal seldom or never used function items of the function menu of the application program. That the function items the user needs are shown is good for the user to search and use. For example, some users seldom use the mobile terminal to send mail, so the users can conceal the function item "send mail" in the yellow pages. With the function menu of the present invention, the user can design a desired and personalized function menu of functions. It helps improve user's using experience, facilitate the user's use of the function menu, and increase using efficiency of the function menu.

The present invention has been described with reference to certain preferred and alternative embodiments which are intended to be exemplary only and not limited to the full scope of the present invention as set forth in the appended claims.

## Claims

1. A method for customizing a function menu of an application program, comprising:
(A) entering an editing interface of the function menu of the application program;
(B) receiving an editing request to the function menu and identifying a type of the editing request;
(C) editing function items of the function menu in the editing interface according to the type of the editing request to form a new function menu;
(D) receiving the new function menu and showing the new function menu;
wherein the step (B) comprises:
(B1) receiving a first editing request which indicates to selecting the function item and moving the function item from a first point of coordinate to a second point of coordinate, and identifying the type of the first editing request; and
the step (C) comprises:
(C1) locating the function item in the function menu according to the second point of coordinate to form the new function menu if the first editing request is a request of adjusting the location of the function item;
wherein the step (B) further comprises:
(B2) receiving a second editing request which indicates to selecting the function item and deleting the function item, and identifying a type of the second editing request; and
the step (C) further comprises:
(C2) labeling a display status of the function item to be concealed to form the new function menu if the second editing request is a request of concealing the function item.

2. The method as claimed in claim 1, wherein the step (B) comprises:
(B3) popping up a list corresponding to the concealed function item, receiving a third editing request corresponding to the function item, and identifying a type of the third editing request;
the step (C) comprises:
(C2) labeling the display status of the function item to be on display to form the new function menu if the third editing request is a request of adding the function item.

3. The method as claimed in claim 2, wherein after (C2), the method further comprises:
(C3) locating the function item last in the function menu.

4. A method for customizing a function menu of an application program, comprising:
(A) entering an editing interface of the function menu of an application program;
(B) receiving an editing request of the function menu and identifying a type of the editing request;
(C) editing the function item of the function menu in the editing interface according to the type of the editing request to form a new function menu;
(D) receiving the new function menu and show the new function menu.

5. The method as claimed in claim 4, wherein the step (B) comprises:
(B1) receiving a first editing request which indicates to selecting the function item and moving the function item from a first point of coordinate to a second point of coordinate, and identifying the type of the first editing request;
the step (C) comprises:
(C1) locating the function item in the function menu according to the second point of coordinate to form the new function menu if the first editing request is a request of adjusting the location of the function item.

6. The method as claimed in claim 4, wherein the step (B) comprises:
(B2) receiving a second editing request which indicates to selecting the function item and deleting the function item, and identifying a type of the second editing request;
the step (C) comprises:
(C2) labeling a display status of the function item to be concealed to form the new function menu if the second editing request is a request of concealing the function item.

7. The method as claimed in claim 4, wherein the step (B) comprises:
(B3) popping up a list corresponding to the concealed function item, receiving a third editing request corresponding to the chosen function item, and identifying a type of the third editing request;
the step (C) comprises:
(C2) labeling the display status of the function item to be on display to form the new function menu if the third editing request is a request of adding the function item.

8. The method as claimed in claim 7, wherein after (C2), the method further comprises:
(C3) locating the function item last in the function menu.

9. A device for customizing a function menu of an application program, comprising:
an identifying module, for receiving an editing request of the function menu and identifying a type of the editing request in an editing interface of the function menu of the application program;
an editing module, for dealing with the function item of the function menu according to the type of the editing request in the editing interface to form a new function menu; and
a display module, for receiving the new function menu and showing the new function menu.

10. The device as claimed in claim 9, wherein the identifying module is used for receiving a first editing request which indicates to selecting the function item and moving the function item from a first point of coordinate to a second point of coordinate, and for identifying the type of the first editing request;
the editing module is used for locating the function item in the function menu according to the second point of coordinate to form the new function menu if the first editing request is a request of adjusting the location of the function item.

11. The device as claimed in claim 9, wherein the identifying module is used for receiving a second editing request which indicates to selecting the function item and deleting the function item, and identifying a type of the second editing request;
the editing module is used for labeling a display status of the function item to be concealed to form the new function menu if the second editing request is a request of concealing the function item.

12. The device as claimed in claim 9, wherein the identifying module is used for popping up a list corresponding to the concealed function item, receiving a third editing request corresponding to the chosen function item, and identifying a type of the third editing request;
the editing module is used for labeling the display status of the function item to be on display to form the new function menu if the third editing request is a request of adding the function item.

13. The device as claimed in claim 12, wherein the editing module locates the function item last in the function menu.
